(19) Europäisches Patentamt
European Patent Office
Office européen des brevets

(11) **EP 4 180 212 A1**

(12) **EUROPEAN PATENT APPLICATION**

(43) Date of publication:
**17.05.2023 Bulletin 2023/20**

(21) Application number: **22205845.5**

(22) Date of filing: **07.11.2022**

(51) International Patent Classification (IPC):
**B29C 65/38** (2006.01)      **B29C 65/00** (2006.01)

(52) Cooperative Patent Classification (CPC):
**B29C 65/38; B29C 66/0044; B29C 66/1122;**
**B29C 66/43; B29C 66/81261; B29C 66/81264;**
**B29C 66/8322; B29C 66/872; B29C 66/91213;**
**B29C 66/91421; B29C 66/91441; B29C 66/961;**
B29C 66/849

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.11.2021 JP 2021184127**

(71) Applicant: **OMRON Corporation**
**Kyoto 600-8530 (JP)**

(72) Inventors:
- **YAMADA, Takaaki**
  **Kyoto, 600-8530 (JP)**
- **UEDA, Norihiro**
  **Kyoto, 600-8530 (JP)**
- **NISHIDE, Miho**
  **Kyoto, 600-8530 (JP)**

(74) Representative: **HGF**
**HGF Limited**
**1 City Walk**
**Leeds LS11 9DX (GB)**

(54) **HEAT SEALING DEVICE AND CONTROL METHOD**

(57)      A heat sealing device (1) includes a heat bar (11) including an attachment surface (111), a stretchable sheet member (12) including a seal surface (121) that covers at least a part of the attachment surface (111), an impulse heater (13) disposed between the attachment surface (111) and the seal surface (121), and a temperature sensor (14) disposed adjacent to the impulse heater (13) between the attachment surface (111) and the seal surface (121).

Fig. 1

EP 4 180 212 A1

**Description**

Technical Field

The present invention relates to a heat sealing device and a method of controlling the heat sealing device.

Background Art

Patent Literature 1 discloses a heat sealing device including a seal bar and a control unit that controls a heater. In the heat sealing device, the seal bar includes a rod-shaped main body including a seal surface, a heater provided inside the main body, and a temperature sensor provided between the seal surface and the heater inside the main body.

Citation List

Patent Literature

Patent Literature 1: JP 2018-103995 A

Summary

Meanwhile, in the heat sealing device, in a case where an impulse heater disposed on the seal surface is used instead of the built-in heater, since the impulse heater has a fast response time, the temperature sensor built in the main body may not be able to perform feedback control of the impulse heater.

An object of the present disclosure is to provide a heat sealing device capable of feedback-controlling an impulse heater, and a method of controlling the heat sealing device.

A heat sealing device according to an aspect of the present disclosure includes:

a heat bar including an attachment surface;
a stretchable sheet member including a seal surface that covers at least a part of the attachment surface in a first direction intersecting the attachment surface;
an impulse heater disposed between the attachment surface and the seal surface; and
a temperature sensor disposed adjacent to the impulse heater between the attachment surface and the seal surface.

In a method of controlling a heat sealing device according to an aspect of the present disclosure, the heat sealing device includes:

a first seal member including a seal surface;
a second seal member capable of sandwiching and heat-sealing a packaging material together with the first seal member;
an impulse heater configured to heat the seal surface;
a temperature sensor configured to detect a temperature of the impulse heater; and
a control device configured to control the impulse heater so that the temperature detected by the temperature sensor becomes a target temperature,
the first seal member includes:

a heat bar including an attachment surface; and
a stretchable sheet member including the seal surface that covers at least a part of the attachment surface in a first direction intersecting the attachment surface,
the impulse heater is disposed between the attachment surface and the seal surface, and
the temperature sensor is disposed adjacent to the impulse heater between the attachment surface and the seal surface,
the method of controlling the heat sealing device includes:

starting control of the impulse heater in synchronization with a start timing of a heat sealing operation of bringing the first seal member and the second seal member close to each other to heat-seal the packaging material held by the first seal member and the second seal member; and
stopping control of the impulse heater in synchronization with an end timing of the heat sealing operation at which the first seal member and the second seal member are separated in a state of holding the heat-sealed packaging material.

According to the heat sealing device of the above aspect, it is possible to realize the heat sealing device capable of feedback-controlling the impulse heater.

According to the control method of the above aspect, it is possible to realize the control method of the heat sealing device capable of feedback-controlling the impulse heater.

Brief Description of Drawings

Fig. 1 is a block diagram illustrating a heat sealing device according to an embodiment of the present disclosure.
Fig. 2 is a perspective view illustrating a first seal member of the heat sealing device of Fig. 1.
Fig. 3 is a cross-sectional view taken along line III-III of Fig. 2.
Fig. 4 is an exploded perspective view illustrating a temperature sensor of the first seal member of Fig. 2.
Fig. 5 is a flowchart for explaining heat sealing processing of the heat sealing device of Fig. 1.
Fig. 6 is a perspective view illustrating a modification example of the heat sealing device of Fig. 1.
Fig. 7 is a cross-sectional view taken along line XII-XII of Fig. 6.
Fig. 8 is a first graph illustrating a relationship between a temperature and time of an impulse heater of a heat sealing device of Example 1.
Fig. 9 is a first graph illustrating a relationship between a temperature and time of an impulse heater of a heat sealing device of a comparative example.
Fig. 10 is a second graph illustrating the relationship between the temperature and time of the impulse heater of the heat sealing device of Example 1.
Fig. 11 is a second graph illustrating the relationship between the temperature and time of the impulse heater of the heat sealing device of the comparative example.
Fig. 12 is a graph illustrating a relationship between a temperature and time of an impulse heater of a heat sealing device of Example 2.

Description of Embodiments

Hereinafter, an example of the present disclosure will be described with reference to the accompanying drawings. Note that the following description is merely exemplary in nature, and is not intended to limit the present disclosure, its application, or its use. Moreover, the drawings are schematic, and ratios of dimensions and the like do not necessarily match actual ones.

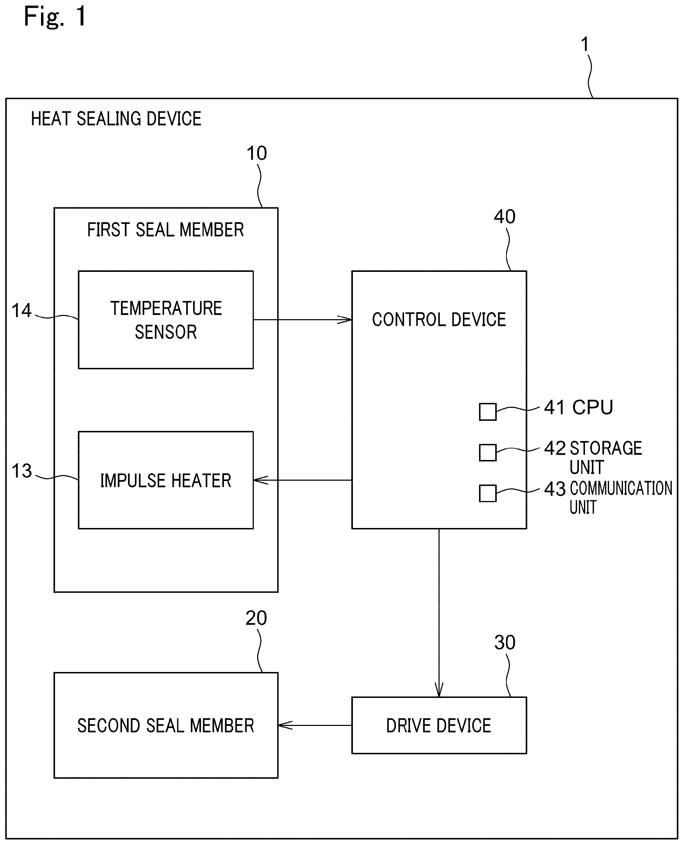

As illustrated in Fig. 1, a heat sealing device 1 according to an embodiment of the present disclosure includes a first seal member 10, a second seal member 20, a drive device 30 that drives the second seal member 20, and a control device 40. The first seal member 10 includes an impulse heater 13 and a temperature sensor 14. The second seal member 20 is configured to be capable of approaching and separating from the first seal member 10 by the drive device 30. The control device 40 feedback-controls the impulse heater 13 based on a detection result of the temperature sensor 14, and controls the drive device 30.

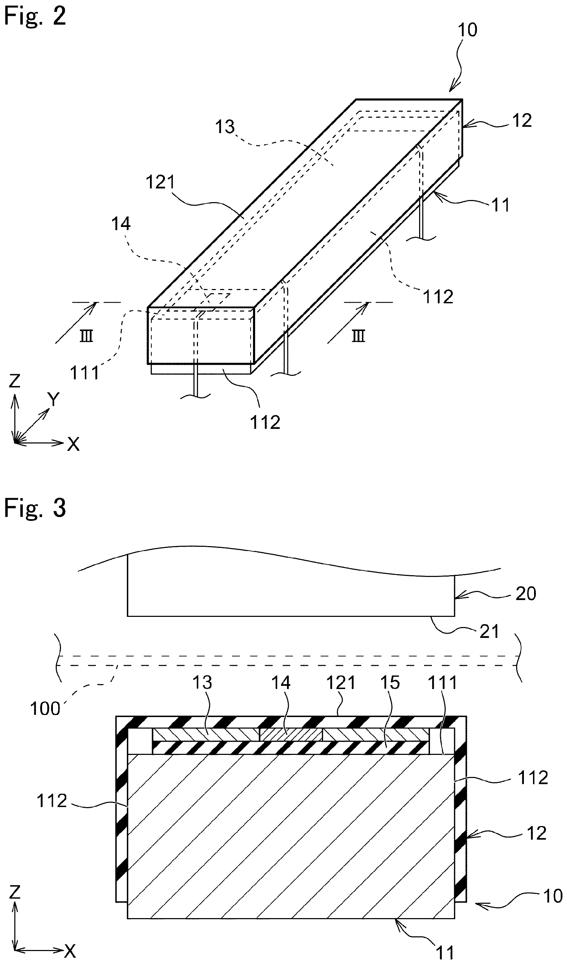

As illustrated in Figs. 2 and 3, the first seal member 10 includes a heat bar 11 and a sheet member 12 in addition to the impulse heater 13 and the temperature sensor 14.

As an example, the heat bar 11 has a metal rod shape and includes an attachment surface 111. The impulse heater 13 and the temperature sensor 14 are attached to the attachment surface 111 via a bonding member 15. The bonding member 15 is made of, for example, a glass tape having an insulating property and heat resistance of 100 to 300°C or more.

The sheet member 12 includes a seal surface 121 that covers at least a part of the attachment surface 111 in a first direction (for example, in a Z direction in Figs. 2 and 3,) intersecting the attachment surface 111 of the heat bar 11. In the present embodiment, the sheet member 12 is made of a material (for example, silicon rubber, fluororubber, and glass fiber) having stretchability and heat resistance of 100 to 300°C or more. For example, when a function as a cushioning material is required to suppress disconnection of the temperature sensor 14, the sheet member 12 preferably has a thickness of 0.5 mm or more. As illustrated in Fig. 3, the sheet member 12 covers the entire attachment surface 111 of the heat bar 11 and a part of the side surface 112 intersecting the attachment surface 111.

The impulse heater 13 is disposed between the attachment surface 111 of the heat bar 11 and the seal surface 121 of the sheet member 12. In the present embodiment, the impulse heater 13 is disposed at a central part of the attachment surface 111 and is configured to heat the seal surface 121 of the sheet member 12.

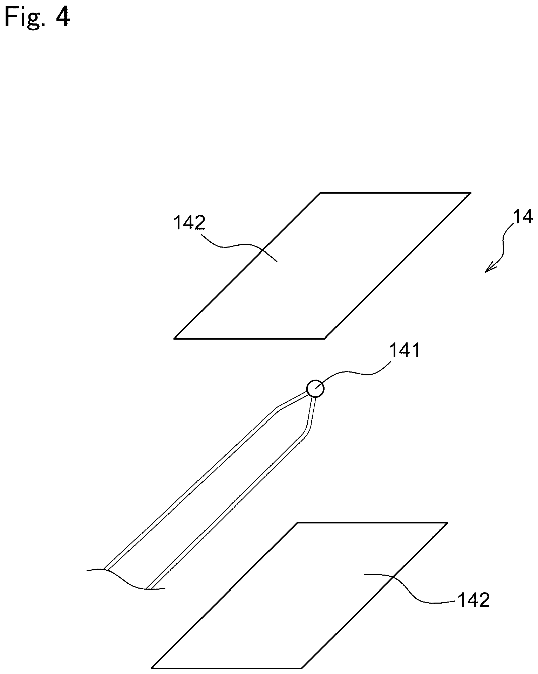

The temperature sensor 14 is disposed adjacent to the impulse heater 13 between the attachment surface 111 of the heat bar 11 and the seal surface 121 of the sheet member 12, and is configured to detect a temperature of the impulse heater (13). In the present embodiment, the temperature sensor 14 is constituted by a thermocouple or a thermometric resistor, and is disposed adjacent to and in contact with the impulse heater 13 in a direction along the attachment surface 111 at an edge part of the attachment surface 111. As illustrated in Fig. 4, the temperature sensor 14 includes a sensor head 141 (for example, a thermocouple contact) and an insulating member 142 that covers the sensor head 141. The insulating member 142 is made of, for example, a material (for example, polyamides, polyimides, polyamideimides and glass fibers) having heat resistance of 100 to 300°C or more, and has a film shape or a sheet shape. In the present embodiment, the sensor head 141 is sandwiched and covered by two insulating members 142. In a case where the temperature sensor 14 is constituted by a thermocouple, it is preferable that the temperature sensor is constituted by a belt-shaped thermocouple having higher strength and durability than those of a linear thermocouple.

As an example, the second seal member 20 has a rod shape made of metal, and includes a facing surface 21 facing the seal surface 121 of the first seal member 10 in a first direction Z as illustrated in Fig. 3.

As an example, the drive device 30 is configured to move the second seal member 20 such that the facing surface 21 can come close to and contact the seal surface 121 along the first direction Z and the facing surface 21 can be separated from the seal surface 121 along the first direction Z.

As an example, the control device 40 includes a CPU 41 that performs calculation, a storage unit 42, and a communication unit 43, and is configured to control the impulse heater 13 so that a temperature of the seal surface 121 detected by the temperature sensor 14 becomes a target temperature. The storage unit 42 includes, for example, a ROM and a RAM, and is configured to store a program and data necessary for controlling the impulse heater 13. The communication unit 43 is configured to input and output information to and from an external device connected in a wireless or wired manner, for example. The external device includes the first seal member 10 and the drive device 30.

In the heat sealing device 1, when a "heat sealing operation" of heat-sealing a packaging material 100 is performed, the packaging material 100 is disposed between the seal surface 121 of the first seal member 10 and the facing surface 21 of the second seal member 20 as illustrated in Fig. 3. When the packaging material 100 is disposed between the seal surface 121 and the facing surface 21, the second seal member 20 is brought close to the first seal member 10, and the packaging material 100 is sandwiched and held between the seal surface 121 and the facing surface 21. In a state where the packaging material 100 is held by the seal surface 121 and the facing surface 21, the impulse heater 13 is turned on to heat the seal surface 121, whereby the packaging material 100 is heat-sealed.

In the present embodiment, the time when an operation in which the second seal member 20 approaches the first seal member 10 is started is referred to as "a start timing of the heat sealing operation", and the time when an operation in which the second seal member 20 separates from the first seal member 10 is started after a predetermined time elapses from "the start timing of the heat sealing operation" is referred to as "an end timing of the heat sealing operation". The time elapsed from the start timing of the heat sealing operation is measured by the control device 40, for example.

The control device 40 is configured to start the control of the impulse heater 13 in synchronization with the start timing of the heat sealing operation, and configured to stop the control of the impulse heater 13 in synchronization with the end timing of the heat sealing operation. When the control of the impulse heater 13 is stopped in synchronization with the end timing of the heat sealing operation, the impulse heater 13 is held in an off state until the start timing of the next heat sealing operation.

In the heat sealing operation, control is periodically performed to shift the impulse heater 13 from the off state to the on state and then from the on state to the off state. For example, when the impulse heater 13 is switched from the on state to the off state in the first cycle, the control device 40 maintains the impulse heater in the off state until shifting to the second cycle immediately after the first cycle.

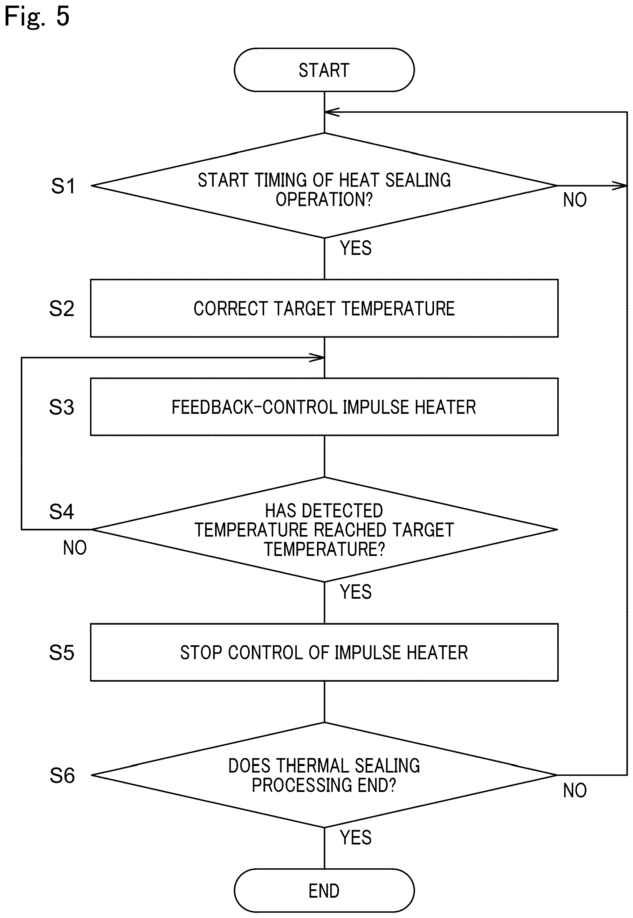

Here, an example of heat sealing processing using the heat sealing device 1 will be described with reference to Fig. 5. The heat sealing processing is realized, for example, by the CPU 41 executing a predetermined program.

As illustrated in Fig. 5, the control device 40 determines whether or not the start timing of the heat sealing operation has been reached (step S1). Step S1 is repeated until it is determined that the start timing of the heat sealing operation has been reached.

When it is determined that the start timing of the heat sealing operation has been reached, the control device 40 corrects a target temperature (step S2). The control device 40 corrects the target temperature based on an initial temperature that is a temperature of the seal surface 121 detected by the temperature sensor 14 at the start timing of the heat sealing operation. Specifically, the control device 40 calculates a correction value by multiplying a difference between the initial temperature and a predetermined reference initial temperature by a constant, and adds the calculated correction value to the target temperature. The control device 40 sets "target temperature + correction value" as a new target temperature.

For example, the reference initial temperature is acquired by actually measuring in advance a temperature of the seal surface 121 at the start timing of the heat sealing operation, and is stored in the storage unit 42. The constant is, for example, an arbitrary integer set in advance according to the design or the like of the heat sealing device 1.

When the target temperature is corrected, the control device 40 performs feedback control (for example, ON/OFF control or PID control) of the impulse heater 13 (step S3). In a case where the impulse heater 13 is controlled by PID control, the control device 40 resets an integral value to zero in synchronization with the start timing of the heat sealing operation.

When the feedback control of the impulse heater 13 is started, the control device 40 determines whether or not the temperature detected by the temperature sensor 14 has reached the target temperature (step S4). When it is determined that the temperature detected by the temperature sensor 14 has not reached the target temperature, the process returns to step S3, and the impulse heater 13 is feedback-controlled.

In a case where it is determined that the temperature detected by the temperature sensor 14 has reached the target temperature, the control device 40 stops the control of the impulse heater 13 (step S5), and determines whether or not the heat sealing processing ends (step S6). In a case where it is determined that the heat sealing processing ends, the control device 40 ends the heat sealing processing. In a case where it is determined that the heat sealing processing is not ended, the process returns to step S1, and it is determined whether or not the start timing of the heat sealing operation has been reached in a state where the control of the impulse heater 13 is stopped.

The heat sealing device 1 can exhibit the following effects.

The heat sealing device 1 includes the heat bar 11, the stretchable sheet member 12, the impulse heater 13, and the temperature sensor 14. The heat bar 11 includes the attachment surface 111. The sheet member 12 includes the seal surface 121 that covers at least a part of the attachment surface 111 in the first direction intersecting the attachment surface 111. The impulse heater 13 is disposed between the attachment surface 111 and the seal surface 121. The temperature sensor 14 is disposed adjacent to the impulse heater 13 between the attachment surface 111 and the seal surface 121. With such a configuration, responsiveness of the temperature sensor 14 can be enhanced. As a result, it is possible to realize the heat sealing device 1 capable of feedback-controlling the impulse heater 13. Furthermore, since the sheet member 12 has stretchability, disconnection of the temperature sensor 14 can be suppressed.

The heat sealing device 1 can arbitrarily adopt any one or a plurality of configurations of the following plurality of configurations. That is, any one or a plurality of configurations of the following plurality of configurations can be arbitrarily deleted when included in the embodiment, and can be arbitrarily added when not included in the embodiment. By adopting such a configuration, it is possible to more reliably realize the heat sealing device 1 capable of feedback-controlling the impulse heater 13.

The impulse heater 13 is attached to the attachment surface 111 via the bonding member 15 having heat resistance and insulating properties.

The temperature sensor 14 includes a thermocouple or a thermometric resistor.

The sheet member 12 is made of any of silicone rubber, fluororubber, and glass fiber.

The temperature sensor 14 includes the sensor head 141 and the film-shaped or sheet-shaped insulating member 142 covering the sensor head 141. The insulating member 142 insulates the sensor head 141 and the heat bar 11 from each other.

The insulating member 142 is made of any of polyamide, polyimide, polyamideimide, and glass fiber.

The heat sealing device 1 includes the control device 40 that feedback-controls the impulse heater 13 based on a detection result of the temperature sensor 14.

The temperature sensor 14 includes a belt-shaped thermocouple.

The method of controlling the heat sealing device 1 can exhibit the following effects.

The heat sealing device 1 includes the first seal member 10, the second seal member 20, the impulse heater 13, the temperature sensor 14, and the control device 40. The first seal member 10 includes the seal surface 121. The second seal member 20 is configured to be capable of heat-sealing by sandwiching the packaging material 100 together with the first seal member 10. The impulse heater 13 is configured to heat the seal surface 121. The temperature sensor 14 is configured to detect the temperature of the impulse heater 13. The temperature sensor 14 is configured to control the impulse heater 13 so that the temperature detected by the temperature sensor 14 becomes the target temperature. The first seal member 10 includes the heat bar 11 including the attachment surface 111, and the stretchable sheet member 12 including the seal surface 121 that covers at least a part of the attachment surface 111 in the first direction intersecting the attachment surface 111. The impulse heater is disposed between the attachment surface 111 and the seal surface 121, and the temperature sensor 14 is disposed adjacent to the impulse heater 13 between the attachment surface 111 and the seal surface 121. A method of controlling the heat sealing device 1 including such a configuration includes starting control of the impulse heater 13 in synchronization with a start timing of the heat sealing operation of bringing the first seal member 10 and the second seal member 20 close to each other to heat-seal the packaging material 100 held by the first seal member 10 and the second seal member 20. The method includes stopping control of the impulse heater 13 in synchronization with an end timing of the heat sealing operation at which the first seal member 10 and the second seal member 20 are separated in the state of holding the heat-sealed packaging material 100. With such a configuration, responsiveness of the temperature sensor 14 can be enhanced, and a sampling period of the temperature sensor 14 can be advanced. As a result, it is possible to realize a control method of the heat sealing device 1 capable of feedback-controlling the impulse heater 13 having an early response time.

In a control method of the heat sealing device 1, any one or a plurality of configurations of the following plurality of configurations can be arbitrarily adopted. That is, any one or a plurality of configurations of the following plurality of configurations can be arbitrarily deleted when included in the embodiment, and can be arbitrarily added when not included in the embodiment. By adopting such a configuration, it is possible to more reliably realize a method of controlling the heat sealing device 1 capable of feedback-controlling the impulse heater 13.

The impulse heater 13 is controlled by on-off control or PID control.

In a case where the impulse heater 13 is controlled by PID control, an integral value is reset to zero in synchronization with the start timing of the heat sealing operation.

The target temperature is corrected based on an initial temperature that is the temperature of the seal surface 121 detected by the temperature sensor 14 at the start timing of the heat sealing operation.

A correction value calculated by multiplying a difference between the initial temperature and a predetermined reference initial temperature by a constant is added to the target temperature to correct the target temperature.

In a case where the control of shifting the impulse heater 13 from the off state to the on state and then shifting the impulse heater 13 from the on state to the off state is periodically performed in the heat sealing operation, when the impulse heater is switched from the on state to the off state in the first cycle, the impulse heater 13 is maintained in the off state until shifting to the second cycle immediately after the first cycle.

The heat sealing device 1 can also be configured as follows.

The heat bar 11 and the impulse heater 13 can adopt arbitrary shapes and sizes according to a design of the heat sealing device 1 and the like.

The sheet member 12 only needs to cover at least a part of at least the attachment surface 111, and is preferably configured to cover the entire impulse heater 13.

The temperature sensor 14 may be disposed at any position on the edge part of the attachment surface 111.

The temperature sensor 14 is not limited to the case of being disposed in contact with the impulse heater 13, and may have a gap with the impulse heater 13.

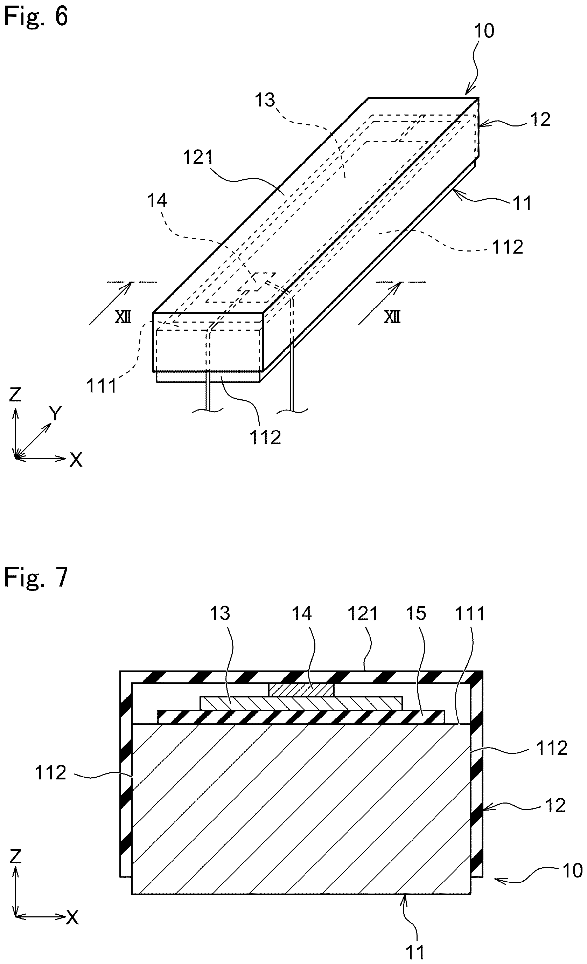

The temperature sensor 14 is not limited to the case of being disposed adjacent to the impulse heater 13 in the direction along the attachment surface 111 at the edge part of the attachment surface 111. For example, as illustrated in Figs. 6 and 7, the temperature sensor 14 may be disposed so as to be sandwiched between the impulse heater 13 and the sheet member 12 in the first direction Z. In other words, the temperature sensor 14 may be disposed adjacent to the impulse heater 13 in the first direction Z between the impulse heater 13 and the seal surface 121. As an example, the temperature sensor 14 is in contact with a surface on an opposite side in the first direction Z of a surface facing the attachment surface 111 of the impulse heater 13 and a surface on an opposite side in the first direction Z of the seal surface 121 of the sheet member 12. With such a configuration, responsiveness of the temperature sensor 14 can be further enhanced.

The first seal member 10 can also be configured to be capable of approaching and separating from the second seal member 20. In this case, the second seal member 20 may be configured to be capable of approaching and separating from the first seal member 10, or may be configured to be incapable of approaching and separating from the first seal member 10.

The second seal member 20 may be configured similarly to the first seal member 10. That is, the heat bar 11, the sheet member 12, the impulse heater 13, and the temperature sensor 14 may constitute the second seal member 20.

The first seal member 10 may have a cutting blade capable of cutting the packaging material 100 on the seal surface 121. Similarly, the second seal member 20 may have a cutting blade capable of cutting the packaging material 100 on the facing surface 21.

Various embodiments of the present disclosure have been described above in detail with reference to the drawings. Finally, various aspects of the present disclosure will be described. Note that, in the following description, as an example, reference signs are also added.

A heat sealing device (1) according to a first aspect of the present disclosure includes:

a heat bar (11) including an attachment surface (111);
a stretchable sheet member (12) including a seal surface (121) that covers at least a part of the attachment surface (111) in a first direction intersecting the attachment surface (111);
an impulse heater (13) disposed between the attachment surface (111) and the seal surface (121); and
a temperature sensor (14) disposed adjacent to the impulse heater (13) between the attachment surface (111) and the seal surface (121).

In the heat sealing device (1) according to a second aspect of the present disclosure,
the temperature sensor (14) is sandwiched between the impulse heater (13) and the sheet member (12) in the first direction.

In the heat sealing device (1) according to a third aspect of the present disclosure,
the impulse heater (13) is attached to the attachment surface (111) via a bonding member having heat resistance and insulating properties.

In the heat sealing device (1) according to a fourth aspect of the present disclosure,
the temperature sensor (14) includes a thermocouple or a thermometric resistor.

In the heat sealing device (1) according to a fifth aspect of the present disclosure,
the sheet member (12) is made of any of silicone rubber, fluororubber, and glass fiber.

In the heat sealing device (1) according to a sixth aspect of the present disclosure,

the temperature sensor (14) includes a sensor head (141) and a film-shaped or sheet-shaped insulating member (142) covering the sensor head 141, and
the insulating member (142) insulates between the sensor head (141) and the heat bar (11).

In the heat sealing device (1) according to a seventh aspect of the present disclosure,
the insulating member (142) is made of any of polyamide, polyimide, polyamideimide, and glass fiber.

The heat sealing device (1) according to an eighth aspect of the present disclosure, further includes
a control device (40) that performs feedback control of the impulse heater (13) based on a detection result of the temperature sensor (14).

In the heat sealing device (1) according to a ninth aspect of the present disclosure,
the temperature sensor (14) includes a belt-shaped thermocouple.

In a method of controlling a heat sealing device according to a tenth aspect of the present disclosure, the heat sealing device includes:

a first seal member (10) including a seal surface (121);
a second seal member (20) capable of sandwiching and heat-sealing a packaging material together with the first seal member (10);
an impulse heater (13) configured to heat the seal surface (121);
a temperature sensor (14) configured to detect a temperature of the impulse heater (13); and
a control device (40) configured to control the impulse heater (13) so that the temperature detected by the temperature sensor (14) becomes a target temperature,
the first seal member (10) includes:

a heat bar (11) including an attachment surface (111); and
a stretchable sheet member (12) including the seal surface (121) that covers at least a part of the attachment surface (111) in a first direction intersecting the attachment surface (111),
the impulse heater (13) is disposed between the attachment surface (111) and the seal surface (121), and
the temperature sensor (14) is disposed adjacent to the impulse heater (13) between the attachment surface (111) and the seal surface (121),
the method of controlling the heat sealing device 1 includes:

starting control of the impulse heater (13) in synchronization with a start timing of a heat sealing operation of bringing the first seal member (10) and the second seal member (20) close to each other to heat-seal the packaging material held by the first seal member (10) and the second seal member (20); and
stopping control of the impulse heater (13) in synchronization with an end timing of the heat sealing operation at which the first seal member (10) and the second seal member (20) are separated in a state of holding the heat-sealed packaging material.

In the method of controlling a heat sealing device according to an eleventh aspect of the present disclosure,
the impulse heater (13) is controlled by on-off control or PID control.

In the method of controlling a heat sealing device according to a twelfth aspect of the present disclosure,
when the impulse heater (13) is controlled by PID control, an integral value is reset to zero in synchronization with a start timing of the heat sealing operation.

In the method of controlling a heat sealing device according to a thirteenth aspect of the present disclosure,
the target temperature is corrected based on an initial temperature that is a temperature of the seal surface (121) detected by the temperature sensor (14) at a start timing of the heat sealing operation.

In the method of controlling a heat sealing device according to a fourteenth aspect of the present disclosure,
a correction value calculated by multiplying a difference between the initial temperature and a predetermined reference initial temperature by a constant is added to the target temperature to correct the target temperature.

In the method of controlling a heat sealing device according to a fifteenth aspect of the present disclosure,

in a case where control of shifting the impulse heater (13) from an off state to an on state and then shifting the impulse heater from the on state to the off state is periodically performed in the heat sealing operation, when the impulse heater (13) is switched from an on state to an off state in a first cycle, the impulse heater (13) is maintained in the off state until shifting to a second cycle immediately after the first cycle.

By appropriately combining arbitrary embodiments or modification examples among the various embodiments or modification examples, it is possible to achieve the respective effects. Furthermore, combinations of embodiments, combinations of examples, or combinations of embodiments and examples are possible, and combinations of features in different embodiments or examples are also possible.

Although the present disclosure has been fully described in connection with preferred embodiments with reference to the accompanying drawings, various changes and modifications will be apparent to those skilled in the art. Such variations and modifications are to be understood as being included within the scope of the present disclosure as set forth in the appended claims.

Examples

Hereinafter, the present disclosure will be described in more detail with reference to examples, but the present disclosure is not limited by the examples at all.

[Example 1]

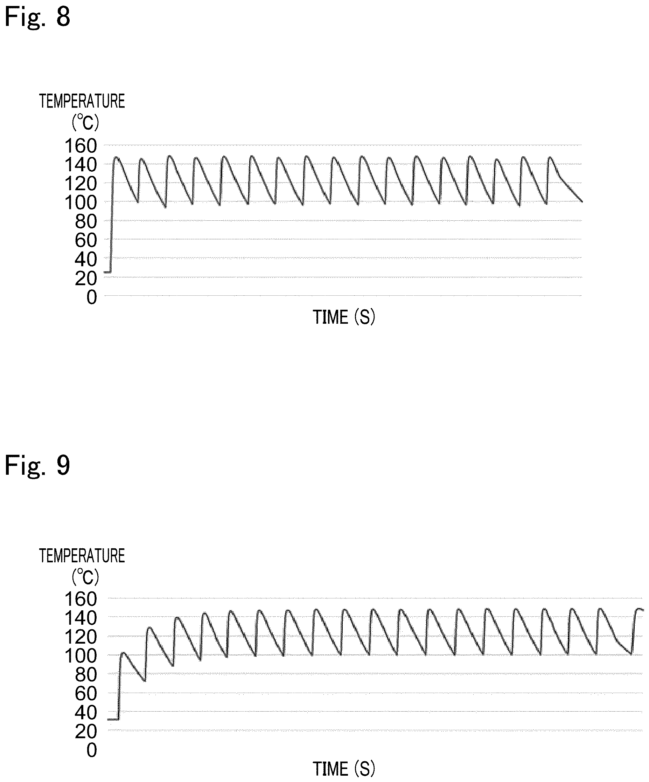

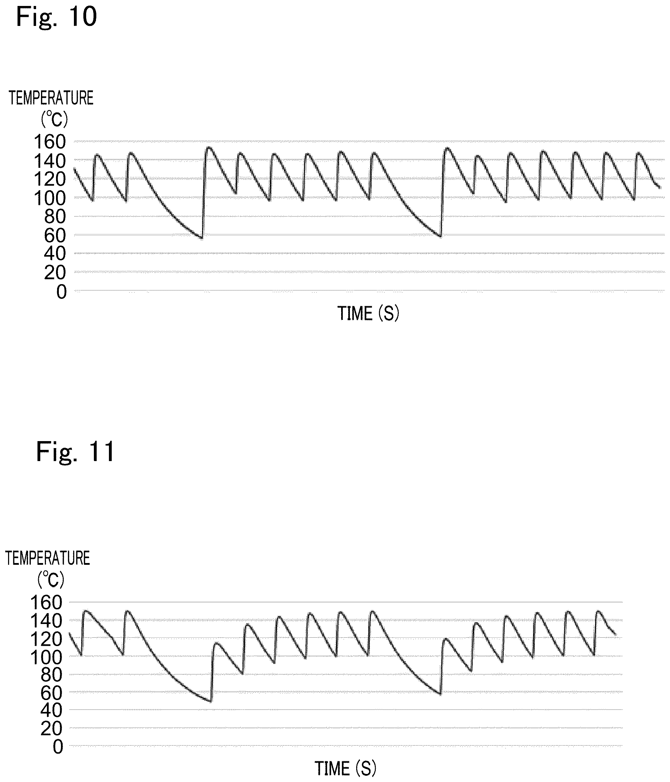

Temperatures of the impulse heater 13 were measured when the heat sealing device 1 was started and the heat sealing operation was performed by the feedback control of the present disclosure. Fig. 8 illustrates temperatures of the impulse heater 13 when the heat sealing operation is started at the time of starting the heat sealing device 1, and Fig. 10 illustrates temperatures of the impulse heater 13 when the heat sealing operation temporarily interrupted is resumed after the operation of the heat sealing device 1 is started.

(Implementation conditions)

- The heat sealing device 1 including the first seal member 10 of Figs. 2 and 3 was used.
- The target temperature was set to 123°C, and the target temperature was not corrected.

    * A thermocouple was used as the temperature sensor.

- The impulse heater 13 was controlled by on-off control.

[Comparative example]

Temperatures of the impulse heater 13 were measured when the heat sealing device 1 was started and the heat sealing operation was performed by the time control without performing the feedback control. Fig. 9 illustrates temperatures of the impulse heater 13 when the heat sealing operation is started at the time of starting the heat sealing device 1, and Fig. 11 illustrates temperatures of the impulse heater 13 when the heat sealing operation temporarily interrupted is resumed after the operation of the heat sealing device 1 is started.

(Implementation conditions)

- The heat sealing device 1 including the first seal member 10 of Figs. 2 and 3 was used.

    * The target temperature was set to 123°C, and the target temperature was not corrected.

- A thermocouple was used as the temperature sensor.

- The impulse heater 13 was controlled by time control in which an operation of maintaining the impulse heater 13 in an on state for 1 second and then maintaining the impulse heater in an off state for 19 seconds was repeated.

(Results)

As illustrated in Figs. 8 and 9, in Example 1, the heat sealing operation was started earlier at the time of starting the heat sealing device 1 than in the comparative example. As illustrated in Figs. 8 to 11, in Example 1, when the heat sealing operation was started at the time of start and after start of the heat sealing device 1, the peak temperature was stabilized earlier than in the comparative example. That is, it has been found that the temperature control of the impulse heater 13 having an early response time can be stably performed by using the heat sealing device 1 and the method of controlling the heat sealing device 1 of the present disclosure.

[Example 2]

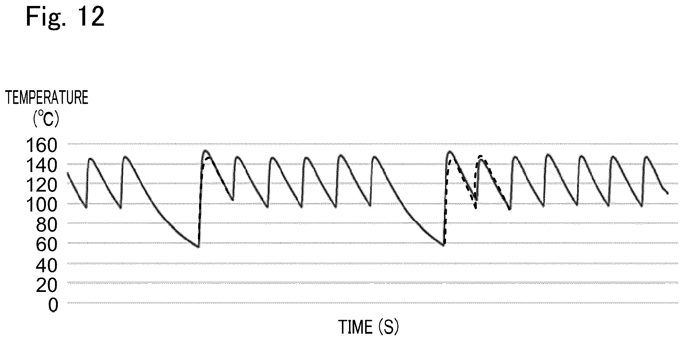

Temperatures of the impulse heater 13 were measured when the target temperature was corrected and the heat sealing operation was performed by the feedback control of the present disclosure. Fig. 12 illustrates temperatures of the impulse heater 13 when the heat sealing operation temporarily interrupted is resumed after the operation of the heat sealing device 1 is started.

(Implementation conditions)

- The heat sealing device 1 including the first seal member 10 of Figs. 2 and 3 was used.
- The target temperature was corrected based on a correction value determined based on the following formula.

$$\text{Correction value} = -0.1 \times (\text{initial temperature} - \text{reference initial temperature})$$

- The reference initial temperature was set to 100 degrees Celsius.
- A thermocouple was used as the temperature sensor.
- The impulse heater 13 was controlled by on-off control.

(Results)

In Fig. 12, the temperatures of the impulse heater 13 of Example 1 are indicated by a dotted line. As illustrated in Fig. 12, in Example 2, the peak temperature immediately after the start of the heat sealing operation was stable as compared with Example 1. That is, it has been found that the variation in peak temperature can be improved by correcting the target temperature.

Industrial Applicability

The heat sealing device and the control method of the present disclosure can be applied to, for example, a device for manufacturing a bag for packaging a food or a medicine.

Reference Signs List

1      heat sealing device
10     first seal member
11     heat bar
111    attachment surface
112    side surface
12     sheet member
121    seal surface

13  impulse heater
14  temperature sensor
141  sensor head
142  insulating member
15  bonding member
20  second seal member
30  drive device
40  control device
41  CPU
42  storage unit
43  communication unit
100  packaging material

**Claims**

1.  A heat sealing device (1), **characterized by** comprising:

    a heat bar (11) including an attachment surface (111);
    a stretchable sheet member (12) including a seal surface (121) that covers at least a part of the attachment surface (111) in a first direction intersecting the attachment surface (111);
    an impulse heater (13) disposed between the attachment surface (111) and the seal surface (121); and
    a temperature sensor (14) disposed adjacent to the impulse heater (13) between the attachment surface (111) and the seal surface (121).

2.  The heat sealing device (1) according to claim 1, wherein
    the temperature sensor (14) is sandwiched between the impulse heater (13) and the sheet member (12) in the first direction.

3.  The heat sealing device (1) according to claim 1 or 2, wherein
    the impulse heater (13) is attached to the attachment surface (111) via a bonding member having heat resistance and insulating properties.

4.  The heat sealing device (1) according to any one of claims 1 to 3, wherein
    the temperature sensor (14) includes a thermocouple or a thermometric resistor.

5.  The heat sealing device (1) according to any one of claims 1 to 4, wherein
    the sheet member (12) is made of any of silicone rubber, fluororubber, and glass fiber.

6.  The heat sealing device (1) according to any one of claims 1 to 5, wherein

    the temperature sensor (14) includes a sensor head (141) and a film-shaped or sheet-shaped insulating member (142) covering the sensor head 141, and
    the insulating member (142) insulates between the sensor head (141) and the heat bar (11).

7.  The heat sealing device (1) according to claim 6, wherein
    the insulating member (142) is made of any of polyamide, polyimide, polyamideimide, and glass fiber.

8.  The heat sealing device (1) according to any one of claims 1 to 7, comprising
    a control device (40) that performs feedback control of the impulse heater (13) based on a detection result of the temperature sensor (14).

9.  The heat sealing device (1) according to any one of claims 1 to 8, wherein
    the temperature sensor (14) includes a belt-shaped thermocouple.

10. A method of controlling a heat sealing device including:

    a first seal member (10) including a seal surface (121) ;

a second seal member (20) capable of sandwiching and heat-sealing a packaging material together with the first seal member (10);
an impulse heater (13) configured to heat the seal surface (121);
a temperature sensor (14) configured to detect a temperature of the impulse heater (13); and
a control device (40) configured to control the impulse heater (13) so that the temperature detected by the temperature sensor (14) becomes a target temperature, wherein
the first seal member (10) includes:

a heat bar (11) including an attachment surface (111); and
a stretchable sheet member (12) including the seal surface (121) that covers at least a part of the attachment surface (111) in a first direction intersecting the attachment surface (111),
the impulse heater (13) is disposed between the attachment surface (111) and the seal surface (121), and
the temperature sensor (14) is disposed adjacent to the impulse heater (13) between the attachment surface (111) and the seal surface (121),
the method, **characterized by** comprising:

starting control of the impulse heater (13) in synchronization with a start timing of a heat sealing operation of bringing the first seal member (10) and the second seal member (20) close to each other to heat-seal the packaging material held by the first seal member (10) and the second seal member (20); and
stopping control of the impulse heater (13) in synchronization with an end timing of the heat sealing operation at which the first seal member (10) and the second seal member (20) are separated in a state of holding the heat-sealed packaging material.

11. The method according to claim 10, wherein
the impulse heater (13) is controlled by on-off control or PID control.

12. The method according to claim 11, wherein
when the impulse heater (13) is controlled by PID control, an integral value is reset to zero in synchronization with a start timing of the heat sealing operation.

13. The method according to any one of claims 10 to 12, wherein
the target temperature is corrected based on an initial temperature that is a temperature of the seal surface (121) detected by the temperature sensor (14) at a start timing of the heat sealing operation.

14. The method according to claim 13, wherein
a correction value calculated by multiplying a difference between the initial temperature and a predetermined reference initial temperature by a constant is added to the target temperature to correct the target temperature.

15. The method according to any one of claims 10 to 14, wherein

in a case where control of shifting the impulse heater (13) from an off state to an on state and then shifting the impulse heater from the on state to the off state is periodically performed in the heat sealing operation,
when the impulse heater (13) is switched from an on state to an off state in a first cycle, the impulse heater (13) is maintained in the off state until shifting to a second cycle immediately after the first cycle.

# Fig. 1

1

HEAT SEALING DEVICE

10

FIRST SEAL MEMBER

14 — TEMPERATURE SENSOR

13 — IMPULSE HEATER

40

CONTROL DEVICE

41 CPU

42 STORAGE UNIT

43 COMMUNICATION UNIT

20

SECOND SEAL MEMBER

30

DRIVE DEVICE

Fig. 2

Fig. 3

Fig. 4

142

14

141

142

Fig. 5

START

S1 — START TIMING OF HEAT SEALING OPERATION? — NO

YES

S2 — CORRECT TARGET TEMPERATURE

S3 — FEEDBACK-CONTROL IMPULSE HEATER

S4 — HAS DETECTED TEMPERATURE REACHED TARGET TEMPERATURE?

NO

YES

S5 — STOP CONTROL OF IMPULSE HEATER

S6 — DOES THERMAL SEALING PROCESSING END? — NO

YES

END

## Fig. 6

## Fig. 7

Fig. 8

Fig. 9

Fig. 10

Fig. 11

Fig. 12

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/008814 A1 (HISHINUMA KAZUO [JP]) 14 January 2021 (2021-01-14) | 1-13,15 | INV. B29C65/38 B29C65/00 |
| A | * paragraph [0068] – paragraph [0136]; figures 1-18 * | 14 | |
| A | US 3 845 606 A (WILSON D) 5 November 1974 (1974-11-05) * column 4, line 38 – column 10, line 48; figures 1-8 * | 1-15 | |
| A | US 2008/187256 A1 (HISHINUMA KAZUO [JP]) 7 August 2008 (2008-08-07) * paragraph [0044] – paragraph [0057]; figures 1-11 * | 1-15 | |
| A | DE 21 19 445 A1 (BAUER) 9 November 1972 (1972-11-09) * paragraph [0010] – paragraph [0015]; claim 1; figures 1-4 * | 1-15 | |
| A | US 4 856 260 A (WOO LECON [US] ET AL) 15 August 1989 (1989-08-15) * column 4, line 64 – column 6, line 35; claim 17; figures 1-5 * | 1-15 | TECHNICAL FIELDS SEARCHED (IPC) B29C |

The present search report has been drawn up for all claims

| Place of search | Date of completion of the search | Examiner |
|---|---|---|
| Munich | 20 February 2023 | Peña, Alejandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5845

20-02-2023

| Patent document cited in search report | | Publication date | Patent family member(s) | | Publication date |
|---|---|---|---|---|---|
| US 2021008814 | A1 | 14-01-2021 | EP | 3812287 A1 | 28-04-2021 |
| | | | JP | 6598279 B1 | 30-10-2019 |
| | | | JP | 2021014039 A | 12-02-2021 |
| | | | US | 2021008814 A1 | 14-01-2021 |
| | | | WO | 2021006230 A1 | 14-01-2021 |
| US 3845606 | A | 05-11-1974 | NONE | | |
| US 2008187256 | A1 | 07-08-2008 | JP | 4616287 B2 | 19-01-2011 |
| | | | JP | 2008189363 A | 21-08-2008 |
| | | | US | 2008187256 A1 | 07-08-2008 |
| DE 2119445 | A1 | 09-11-1972 | NONE | | |
| US 4856260 | A | 15-08-1989 | AU | 614445 B2 | 29-08-1991 |
| | | | CA | 1315666 C | 06-04-1993 |
| | | | DE | 68911521 T2 | 28-07-1994 |
| | | | EP | 0407500 A1 | 16-01-1991 |
| | | | JP | H03502679 A | 20-06-1991 |
| | | | US | 4856260 A | 15-08-1989 |
| | | | WO | 9004541 A1 | 03-05-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018103995 A